# EUROPEAN PATENT APPLICATION

(11) **EP 4 723 318 A1**
(43) Date of publication of application: **08.04.2026**
(21) Application number: 25202860.0
(22) Date of filing: 17.09.2025
(51) Int. Cl.: H01M 50/147, H01M 50/159, H01M 50/176, H01M 50/188, H01M 50/553, H01M 50/566

(54) **CAP ASSEMBLY AND SECONDARY BATTERY USING THE SAME**

(30) Priority: 02.10.2024 KR 20240134114
(71) Applicant: SAMSUNG SDI CO., LTD., Yongin-si, Gyeonggi-do 17084 (KR)
(72) Inventor: LEE, Chang Mu, 16678 Suwon-si (KR)
(74) Representative: Marks & Clerk LLP

(57) **Abstract**

A cap assembly (30), including a cap plate (31) having a hole therein, a terminal plate (330) having a lower portion (332) in the hole, and an upper portion (331) above the cap plate and exposed, and a sub-plate (350) below the cap plate, the sub-plate being bonded to the lower portion of the terminal plate.

## Description

### BACKGROUND

### 1. Field

The present disclosure relates to a cap assembly and a secondary battery including the same.

### 2. Description of the Related Art

Unlike a primary battery that cannot be recharged, a secondary battery is a battery that can be recharged and discharged. A low-capacity secondary battery may be used for portable small-sized electronic devices, such as smartphones, feature phones, notebook computers, digital cameras, and camcorders, and a high-capacity secondary battery is widely used as a power source for driving a motor and a power storage battery in hybrid vehicles or electric vehicles. The secondary battery includes an electrode assembly including a positive electrode and a negative electrode, a case accommodating the electrode assembly, an electrode terminal connected to the electrode assembly, and the like.

Secondary batteries have a can type and a pouch type depending on the shape of a case accommodating an electrode assembly. In this case, the can type may have, for example, a prismatic shape and a cylindrical shape. When the secondary battery is of the can type, the secondary battery includes a can that accommodates the electrode assembly and a cap assembly that seals the can.

The above-described information disclosed in the background technology of the present disclosure is merely intended to improve understanding of the background of the present disclosure and thus may include information that does not form the related art.

### SUMMARY

Embodiments include a cap assembly, including a cap plate having a hole (formed) therein, a terminal plate having a lower portion in (or inserted into) the hole, and an upper portion (located) above the cap plate and exposed, and a sub-plate (located) below the cap plate, the sub-plate being bonded to the lower portion of the terminal plate.

The terminal plate may be electrically connected to the sub-plate via the lower portion of the terminal plate (or as the lower portion thereof extends toward the sub-plate).

The sub-plate may include a protrusion protruding toward the terminal plate, the sub-plate being bonded to the terminal plate through the protrusion (or the protrusion projecting toward the terminal plate and is bonded to the terminal plate through the protrusion).

A ratio of a thickness of the sub-plate and a height of the protrusion may be (configured) in a range of 0.2 to 0.6:0.8 to 1.2.

An upper side of the sub-plate may be welded to a lower side of the terminal plate (or bonded to a lower side of the terminal plate through welding).

The cap assembly may further include a welding plate (located) between the terminal plate and the sub-plate.

The terminal plate may be bonded to the sub-plate by (or while forming) a clad metal.

The cap assembly may further include an insulator (located) in the hole, the insulator insulating the terminal plate and the cap plate from each other (or the insulator insulates between the terminal plate and the cap plate).

The insulator may extend along an upper side of the cap plate from the hole, the insulator insulating the terminal plate and the upper side of the cap plate from each other (or the insulator insulates between the terminal plate and the upper side of the cap plate).

The insulator may extend along a lower side of the cap plate from the hole, the insulator insulating the sub-plate and the lower side of the cap plate from each other (or the insulator insulates between the sub-plate and the lower side of the cap plate).

Embodiments include a secondary battery, including an electrode assembly, a case accommodating (or configured to accommodate) the electrode assembly therein, and a cap assembly coupled to the case, the cap assembly sealing (or configured to seal) the case, wherein the cap assembly includes a cap plate coupled to the case, the cap plate having a hole (formed) therein, a terminal plate having a lower portion in (or inserted into) the hole and an upper portion (located) above the cap plate and exposed, and a sub-plate (located) between the cap plate and the electrode assembly, the sub-plate being bonded to the lower portion of the terminal plate.

The sub-plate may electrically connect the electrode assembly and the terminal plate.

The terminal plate may be electrically connected to the sub-plate via the lower portion of the terminal plate (or as the lower portion thereof extends toward the sub-plate).

The sub-plate may include a protrusion protruding toward the terminal plate, the sub-plate being bonded to the terminal plate through the protrusion (or the protrusion projecting toward the terminal plate and is bonded to the terminal plate through the protrusion).

A ratio of a thickness of the sub-plate and a height of the protrusion may be (configured) in a range of 0.2 to 0.6:0.8 to 1.2.

An upper side of the sub-plate may be welded to a lower side of the terminal plate (or bonded to a lower side of the terminal plate through welding).

The cap assembly may further include a welding plate (located) between the terminal plate and the sub-plate.

The terminal plate may be bonded to the sub-plate by (or while forming) a clad metal.

The cap assembly may further include an insulator (located) in the hole, the insulator insulating the terminal plate and the cap plate from each other (or the insulator insulates between the terminal plate and the cap plate).

The insulator may extend along an upper side of the cap plate from the hole, the insulator insulating the terminal plate and the upper side of the cap plate from each other (or the insulator insulates between the terminal plate and the upper side of the cap plate).

The insulator may extend along a lower side of the cap plate from the hole, the insulator insulating the sub-plate and the lower side of the cap plate from each other (or the insulator insulates between the sub-plate and the lower side of the cap plate).

At least some of the above and other features of the invention are set out in the claims.

### BRIEF DESCRIPTION OF THE DRAWINGS

Features will become apparent to those of ordinary skill in the art by describing in detail example embodiments with reference to the attached drawings, in which:
FIG. 1 is a perspective view schematically illustrating a configuration of a secondary battery according to an embodiment of the present disclosure;
FIG. 2 is a cross-sectional view schematically illustrating a configuration of the secondary battery according to an embodiment of the present disclosure;
FIG. 3 is a cross-sectional view illustrating a cap assembly;
FIG. 4 is a cross-sectional view illustrating the cap assembly;
FIG. 5 is a cross-sectional view illustrating a cap assembly according to an embodiment of the present disclosure;
FIG. 6 is a cross-sectional view illustrating a cap assembly according to an embodiment of the present disclosure; and
FIG. 7 is a cross-sectional view illustrating a secondary battery according to an embodiment of the present disclosure.

### DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey example implementations to those skilled in the art.

In the drawing figures, the dimensions of layers and regions may be exaggerated for clarity of illustration. It will also be understood that when a layer or element is referred to as being "on" another layer or substrate, it can be directly on the other layer or substrate, or intervening layers may also be present. Further, it will be understood that when a layer is referred to as being "under" another layer, it can be directly under, and one or more intervening layers may also be present. In addition, it will also be understood that when a layer is referred to as being "between" two layers, it can be the only layer between the two layers, or one or more intervening layers may also be present. Like reference numerals refer to like elements throughout.

The terms or words used in the present specification and claims should not be construed as being limited to ordinary or dictionary meanings and should be construed as meanings and concepts consistent with the technical scope of the present disclosure based on the principle that an inventor can appropriately define concepts and terms to explain the disclosure of the inventor in the best way. Therefore, the embodiments described herein and the configuration illustrated in the drawings are only the most preferred some embodiments and are not representative of the full the technical scope of the present disclosure, and thus, it should be understood that various changes and modifications may be made within the scope of the claims.

Further, when used in the present specification, "comprise," "include," "comprising" and/or "including" may specify the presence of described shapes, numbers, steps, operations, members, elements, and/or groups thereof and may not exclude the presence or addition of one or more other shapes, numbers, steps, operations, members, elements, and/or groups thereof. Further, the use of "may" when describing embodiments of the present disclosure may include one or more embodiments of the present disclosure.

The description that two objects for comparison are "the same" as each other may denote that they are "substantially the same" as each other. Thus, the range of the expression "substantially the same" may include a case of having a deviation considered as a low degree, for example, a deviation within 5%. In addition, the description that a certain parameter is the same in a certain region may denote that the parameter is the same from an average perspective.

Terms including ordinals such as first and second may be used to describe various components, but, of course, the components are not limited by the terms. These terms are merely used to distinguish one component from another. Unless particularly described as the opposite, a first component may also be a second component.

Throughout the specification, unless particularly described otherwise, each component may be provided in a singular number or a multiple number.

Arrangement of any configuration on an "upper portion (or lower portion)" of a component or "on (or below)" the component may mean not only any configuration may be disposed to be in contact with an upper surface (or lower surface) of the component but also that another configuration may be interposed between the component and any configuration disposed on (or below) the component.

Further, it should be noted that when one component is described as being "connected," "coupled," or "joined" to another component, still another component may be "connected," "coupled," or "joined" between the two components, even though the component may be directly "connected," "coupled," or "joined" to the other component. In addition, when a part is referred to as being "electrically connected" to other parts, the part may be directly connected to the other parts or may be connected to the other parts with other devices therebetween.

Unless otherwise specifically stated, throughout the specification, the expression "A and/or B" means A, B, or A and B. That is, "and/or" may include all combinations or arbitrary combinations of a plurality of listed items. "C to D" may denote C or greater to D or less, unless particularly otherwise described.

When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C.

As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, and the like may be used herein to describe various elements, components, regions, layers, and/or sections, these elements, components, regions, layers, and/or sections should not be limited by these terms. These terms are used to distinguish one element, component, region, drawing layer, or cross section from another element, component, region, drawing layer, or cross section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the drawings. It will be understood that the spatially relative terms are intended to encompass different orientations of the device in use or operation in addition to the orientation depicted in the figures. For example, when the device in the drawing is turned over, elements described as "below" or "beneath" other elements would then be oriented "above" or "over" the other elements. Thus, the term "below" may encompass both an orientation of above and below.

The terms used in the present specification are intended to describe embodiments of the present disclosure and are not intended to limit the present disclosure.

In the present specification, an x-axis direction refers to a length direction of a secondary battery 100. In the present specification, a y-axis direction refers to a width direction of the secondary battery 100. In the present specification, a z-axis direction refers to a height direction of the secondary battery 100.

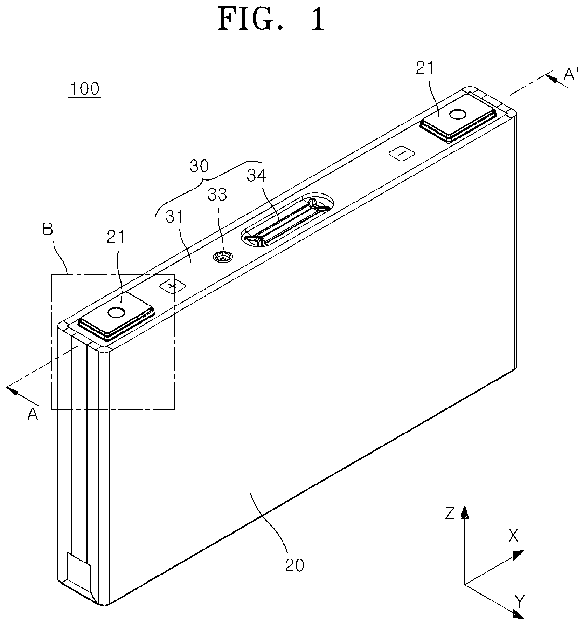

FIG. 1 is a perspective view schematically illustrating a configuration of a secondary battery according to an embodiment of the present disclosure.

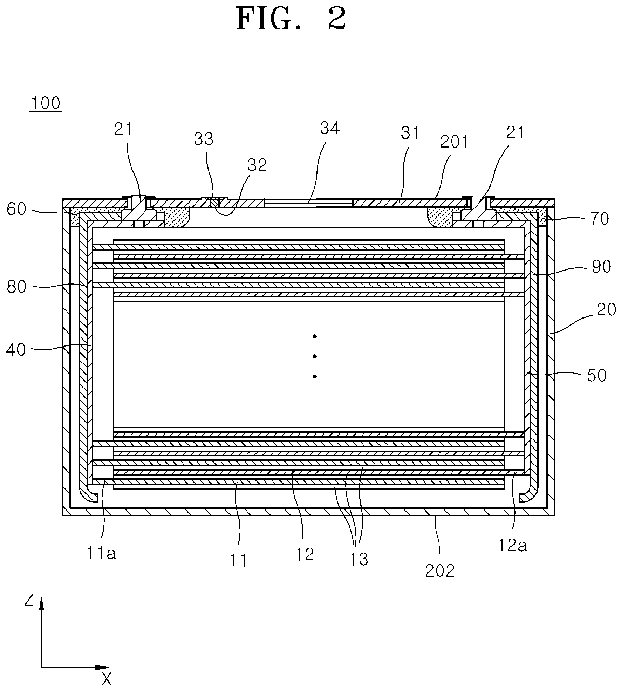

FIG. 2 is a cross-sectional view schematically illustrating a configuration of the secondary battery according to an embodiment of the present disclosure. FIG. 2 is a cross-sectional view of a secondary battery 100 taken along line A-A' illustrated in FIG. 1.

The secondary battery 100 according to an embodiment of the present disclosure may include at least one electrode assembly in which a separator 13, which is an insulator, is interposed between a positive electrode 11 and a negative electrode 12, and wound together, a case 20 in which the electrode assembly is embedded, and a cap assembly 30 coupled to an opening of the case 20.

Hereinafter, a case in which the secondary battery 100 is a lithium-ion secondary battery and has a prismatic shape will be described as an example. However, the secondary battery 100 may be a lithium polymer battery or a cylindrical battery.

The positive electrode 11 and the negative electrode 12 may each include a coated portion, which is a region in which an active material is applied on an electrode current collector formed of a thin metal foil, and uncoated portions 11a and 12a, which are regions to which the active material is not applied, respectively.

The positive electrode 11 and the negative electrode 12 may be wound after interposing the separator 13, which is an insulator, therebetween. However, the electrode assembly may have a structure in which a positive electrode and a negative electrode, each formed of a plurality of sheets, are alternately stacked, while interposing a separator therebetween.

The case 20 forms an overall external appearance of the secondary battery 100, and may be formed of a conductive metal such as aluminum, an aluminum alloy, or nickel-plated steel. In addition, the case 20 may provide a space in which the electrode assembly is accommodated.

The cap assembly 30 may include a cap plate 31 configured to cover the opening of the case 20, and the case 20 and the cap plate 31 may be made of a conductive material. Here, a terminal 21 electrically connected to the positive electrode 11 or the negative electrode 12 may be installed to protrude to the outside through the cap plate 31.

In addition, the pair of the terminal 21 protruding to the outside of the cap plate 31 may be formed as a pair. The pair of the terminal 21 may be connected to the positive electrode 11 and the negative electrode 12 and may function as a positive electrode terminal and a negative electrode terminal of the secondary battery 100, respectively.

More specifically, the pair of the terminal 21 may be electrically connected to terminal pins including first and second terminal pins 40 and 50 (hereinafter, referred to as positive and negative electrode terminal pins) that are bonded to a positive electrode uncoated portion 11a and a negative electrode uncoated portion 12a, respectively, by welding. For example, the pair of the terminal 21 may be coupled to the positive and negative electrode terminal pins 40 and 50, respectively, by welding. However, the pair of the terminal 21 may be integrally coupled with the positive and negative electrode terminal pins 40 and 50. An outer circumferential surface of an upper column of the pair of the terminal 21 may be screw-processed and may be fixed to the cap plate 31 with a nut, for example.

However, the pair of the terminal 21 may have a rivet structure and may be riveted to the cap plate 31, or be welded to the cap plate 31.

In addition, the cap plate 31 may be made of a thin plate and coupled to the opening of the case 20. In the cap plate 31, an electrolyte injection hole 32 in which a sealing cap 33 may be installed may be formed, and a vent 34 may be installed.

The vent 34 may be opened and closed in conjunction with a change in internal pressure of the case 20. That is, the vent 34 may seal the case 20 by maintaining a closed state during normal operation of the electrode assembly. The vent 34 may be opened as the internal pressure of the case 20 is increased to a set magnitude or more due to overcharge, fire occurrence, or the like, and may discharge emissions such as flames and gas from the inside of the case 20 to the outside of the case 20.

In addition, an insulating member may be installed between the electrode assembly and the cap plate 31. Here, the insulating member may include a first lower insulating member 60 and a second lower insulating member 70, and each of the first and second lower insulating members may be installed between the electrode assembly and the cap plate 31.

In addition, according to the present embodiment, one end of a separation member, which may be installed to face one side surface of the electrode assembly, may be installed between the insulating member and the pair of the terminal 21.

Here, the separation member may include a first separation member 80 and a second separation member 90.

Accordingly, one end of each of the first separation member 80 and the second separation member 90, each of which may be installed to face one side surface of the electrode assembly, may be installed between the first lower insulating member 60 and the second lower insulating member 70 and the electrode terminal 21 (positive) and the electrode terminal 22 (negative), respectively.

As a result, the pair of the terminal 21 welded to the positive electrode terminal pin 40 and the negative electrode terminal pin 50 may be coupled to the first lower insulating member 60 and the second lower insulating member 70 and one end of each of the first separation member 80 and the second separation member 90, respectively.

FIGS. 1 and 2 illustrate an example of the secondary battery 100 with a prismatic shape according to an embodiment of the present disclosure. However, the example of the secondary battery 100 according to an embodiment of the present disclosure may be applied to all types of secondary batteries that include the cap assembly 30. Hereinafter, the case in which the secondary battery 100 is a prismatic secondary battery will be described as an example.

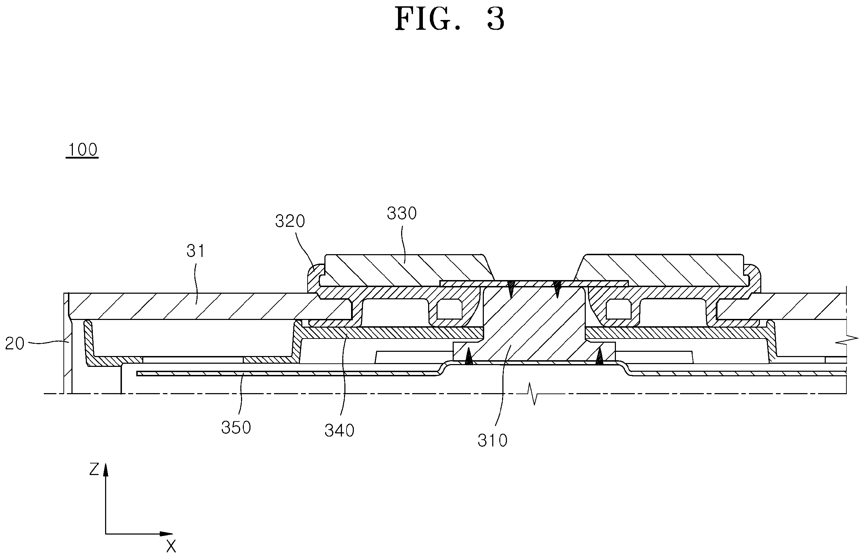

FIG. 3 is a cross-sectional view illustrating a cap assembly.

FIG. 3 is a cross-sectional view taken along line A-A' of FIG. 1, illustrating an enlarged view of region B.

As described in FIGS. 1 and 2, the secondary battery 100 includes the electrode assembly, the case 20 that accommodates the electrode assembly, and the cap assembly 30 that is coupled to the opening of the case 20 and seals the case 20. In FIG. 3, the cap assembly 30 will be described.

For example, the case 20 may be in the form of a substantially rectangular box. For example, the case 20 may include a rectangular-shaped bottom surface, and four side surfaces that are perpendicularly connected to the bottom surface. For example, in the case 20, an upper portion in a height direction (z-axis direction) may be open, and an accommodation space may be formed inside. The case 20 accommodates the electrode assembly and the electrolyte therein through the open upper portion.

The cap assembly 30 is coupled to the opening of the case 20 in which the electrode assembly is accommodated. The cap assembly 30 is electrically connected to the electrode assembly.

The cap assembly 30 includes the cap plate 31 on which (e.g., through which) the pair of the terminal 21 are formed.

The cap plate 31 is coupled to the case 20. For example, the cap plate 31 is in the shape of a rectangular plate. The cap plate 31 may be formed of the same material as the case 20, this may vary. The cap plate 31 may have a size corresponding to an inner side size of the opening of the case 20. The cap plate 31 may be coupled to the case 20 by methods such as laser welding.

The cap plate 31 includes a pair of holes to which the pair of the terminal 21 may be coupled (e.g., and protrude), respectively. The pair of holes may be located to be spaced apart from each other. In addition, the cap plate 31 may include an injection hole (e.g., 33 in FIG. 1) through which an electrolyte may be injected, a vent hole for coupling a vent (e.g., 34 in FIG. 1), and the like. At this time, the vent may rupture and release gas when an internal pressure of the secondary battery 100 increases.

FIG. 3 illustrates only one of the pair of the terminal 21.

The pair of the terminal 21 includes a current collecting part 310 inserted into the hole formed in the cap plate 31, and a terminal plate 330 that is electrically connected to the current collecting part 310, is exposed to the outside of the cap plate 31, and forms the exterior of the pair of the terminal 21.

The pair of the terminal 21 serve as paths for electrically connecting the electrode assembly to the outside. The terminal 21 may be provided as a pair of the terminal 21 including a negative electrode terminal connected to the negative electrode and a positive electrode terminal connected to the positive electrode.

The current collecting part 310 has a substantially cylindrical or polygonal column shape, but the shape may vary. The current collecting part 310 is electrically connected to the electrode assembly by being electrically connected to a sub-plate 350. For example, the current collecting part of the negative electrode terminal may be electrically connected to the negative electrode by being electrically connected to a negative electrode sub-plate. For example, the positive electrode terminal may be electrically connected to the positive electrode by being electrically connected to a positive electrode sub-plate.

The terminal plate 330 is disposed at the topmost portion of the pair of the terminal 21. The terminal plate 330 includes a conductive material. The terminal plate 330 electrically connects the secondary battery 100 to the outside.

For example, the terminal plate 330 may be formed to have a substantially plate shape. For example, the terminal plate 330 may be disposed parallel (in the z-axis direction) to an upper end of the electrode assembly.

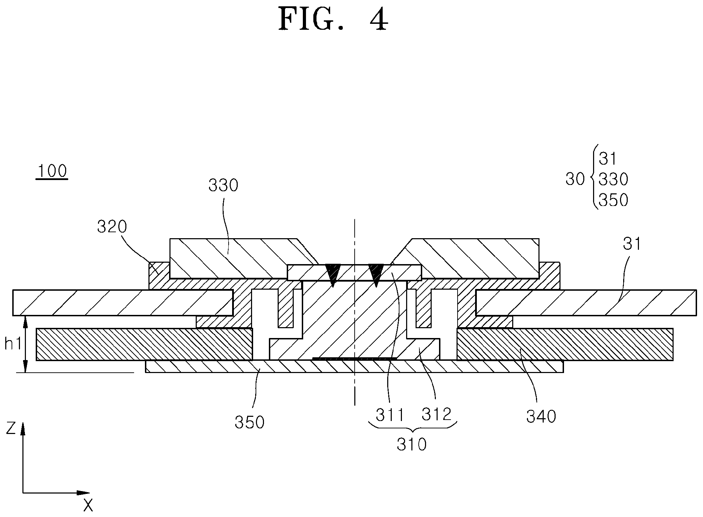

The terminal plate 330 may include a terminal hole through which the current collecting part 310 can pass and be inserted. The terminal plate 330 is provided along an outer surface or outer peripheral surface of the current collecting part 310 in a state in which the current collecting part 310 is inserted into the cap plate 31. The terminal plate 330 may be coupled to the current collecting part 310 as an upper end of the current collecting part 310 is pressed and/or deformed. As a result, the current collecting part 310 may be fixed to the terminal plate 330. The current collecting part 310 may include an upper portion 311 inserted into the terminal hole of the terminal plate 330 and a lower portion312 located below the upper portion 311 and disposed on the sub-plate 350 (see FIG. 4).

The cap assembly 30 further includes the sub-plate 350. The sub-plate 350 electrically connects the current collecting part 310 and the electrode assembly. To this end, the sub-plate 350 includes a conductive material.

The sub-plate 350 is located below the cap plate 31. For example, a portion of an upper side of the sub-plate 350 may face a lower side of the current collecting part 310. A portion of the upper side of the sub-plate 350 is electrically connected to at least a portion of the lower side of the current collecting part 310. The sub-plate 350 may have a substantially plate shape.

The sub-plate 350 is located above the electrode assembly. For example, a lower side of the sub-plate 350 may face the upper side of the electrode assembly. The sub-plate 350 may be electrically connected to the electrode assembly by being connected to a substrate tab extending from the electrode assembly.

With this structure, the secondary battery 100 may form a current path along the electrode assembly, the sub-plate 350, the current collecting part 310, and the terminal plate 330. In addition, the electrode assembly may be electrically connected to the outside (e.g., by the terminal plate 330).

The cap assembly 30 further includes a top insulator 320.

The top insulator 320 insulates between the terminal plate 330 and the cap plate 31 (e.g., the top insulator 320 electrically insulates the terminal plate 330 and the cap plate 31 from each other). The top insulator 320 includes an insulating material. The top insulator 320 may be formed to correspond to the shape of the terminal plate 330. When the terminal plate 330 has a rectangular plate shape, the top insulator 320 may also have a rectangular plate shape. In this case, the top insulator 320 may be formed larger than the terminal plate 330. The top insulator 320 may include a groove into which the terminal plate 330 may be seated. For example, the top insulator 320 may be formed through injection.

In addition, the top insulator 320 insulates between the current collecting part 310 and the cap plate 31. The top insulator 320 may be formed to surround at least a portion of an outer peripheral surface of the current collecting part 310. The top insulator 320 may prevent the current collecting part 310 from coming into contact with the hole formed in the cap plate 31.

The cap assembly 30 further includes a bottom insulator 340.

The bottom insulator 340 insulates between the electrode assembly and the cap plate 31. The bottom insulator 340 includes an insulating material. For example, the bottom insulator 340 may be located above the electrode assembly. In other embodiments, for example, the bottom insulator 340 may be formed to surround at least another portion of the outer peripheral surface of the current collecting part 310. Accordingly, the current collecting part 310 may be insulated by the top insulator 320 at upper and/or intermediate sides, and insulated by the bottom insulator 340 at a lower side.

With this structure, the components at the upper portion of the secondary battery 100 may be simplified while resistance is simultaneously reduced. Accordingly, in the secondary battery 100, both cost reduction and reduced heat generation can be achieved.

FIG. 4 is a cross-sectional view illustrating the cap assembly according to an embodiment of the present disclosure.

FIG. 4 is a cross-sectional view taken along line A-A' of FIG. 1, illustrating an enlarged view of region B of FIG. 1. FIG. 4 is a view schematically illustrating the cap assembly 30 described in FIG. 3 for convenience of description.

As described in FIG. 3, the cap assembly 30 includes the terminal plate 330 and the top insulator 320 that surrounds the terminal plate 330.

In this case, the current collecting part 310 is coupled to the sub-plate 350 by a cladding method. The cladding method is a method of fusing two or more different metals or alloys using techniques such as hot pressing. Through this, the current collecting part 310 and the sub-plate 350 can be connected to each other without welding separate rivets.

By omitting rivets as described above, the cap assembly 30 described in FIG. 3 can reduce a current path and lower component resistance. Further, the cap assembly 30 also provides the effect of reducing manufacturing costs and heat generation in the secondary battery.

In FIG. 4, h1 represents a distance from a lower surface of the cap plate 31 to a lower surface of the sub-plate 350.

The cap assembly 30 described with reference to FIG. 3 forms a height of h1 inside the case 20. That is, h1 represents a height of a space inside the case 20 in which the electrode assembly cannot be located.

As the height of h1 decreases, a space that the electrode assembly can occupy inside the case 20 increases. That is, the capacity of the secondary battery 100 is increased. Thus, a method to further reduce the height of h1 will be described below.

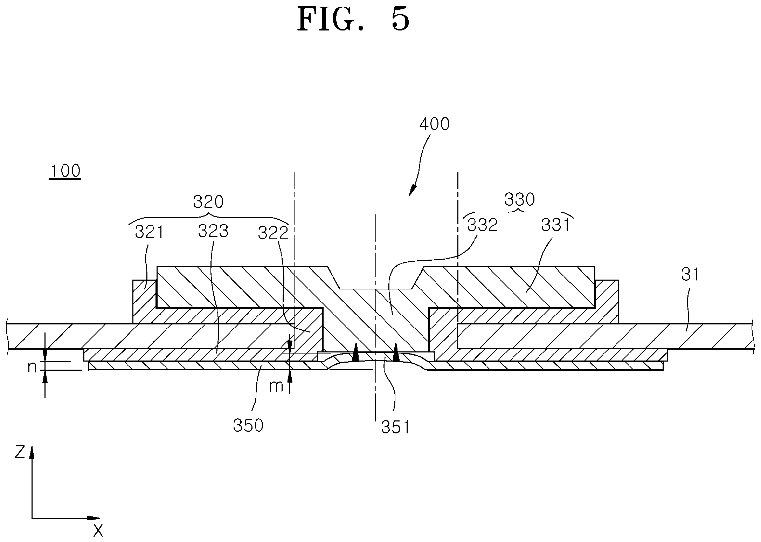

FIG. 5 is a cross-sectional view illustrating a cap assembly according to an embodiment of the present disclosure.

FIG. 5 is a cross-sectional view taken along line A-A' of FIG. 1, illustrating an enlarged view of region B of FIG. 1.

A cap assembly 30 according to an embodiment of the present disclosure includes a cap plate 31 having a hole formed therein, a terminal plate 330 having a lower portion inserted into the hole, and an upper portion located above the cap plate 31 and exposed, and a sub-plate 350 located below the cap plate 31 and bonded to the lower portion of the terminal plate 330.

The cap assembly 30 according to an embodiment of the present disclosure can simplify the components thereof further than what is described with respect to FIGS. 3 and 4. Through this, the cap assembly 30 allows the capacity of the secondary battery 100 according to an embodiment of the present disclosure to be further increased.

Specifically, the cap assembly 30 allows the current collecting part 310 to be omitted. A configuration of the cap assembly 30 in which the current collecting part 310 is omitted will be described in detail below.

The cap assembly 30 includes the cap plate 31, the terminal plate 330, and the sub-plate 350.

As described in FIGS. 1 to 4, the cap plate 31 is coupled to the opening of the case 20 and seals the case 20. The cap plate 31 prevents the electrode assembly from protruding out of the case 20. In addition, the cap plate 31 may prevent an electrolyte from leaking from the case 20. The description of the cap plate 31 is the same as or similar to that provided in FIGS. 1 to 4.

The cap plate 31 includes two holes into which the pair of the terminal 21 may be inserted. The pair of the terminal 21 includes the terminal plate 330. The terminal plate 330 is connected to the outside to allow the electrode assembly to be electrically connected to the outside.

The terminal plate 330 includes an upper portion 331 and a lower portion 332 that are connected to each other (see FIG. 5).

The upper portion 331 of the terminal plate is located above the cap plate 31. Accordingly, the upper portion 331 of the terminal plate may be exposed to the outside above the cap plate 31.

The upper portion 331 of the terminal plate provides a space for the terminal plate 330 to be electrically connected to the outside. For example, the upper portion 331 of the terminal plate may be bonded and electrically connected to a bus bar. To this end, the upper portion 331 of the terminal plate may have a surface that is at least partially flat. The upper portion 331 of the terminal plate may be formed in a flat shape such as, for example, a circular shape, a rectangular shape, a square shape, or a polygonal shape.

The lower portion 332 of the terminal plate is inserted into a hole 400 formed in the cap plate 31. Accordingly, the lower portion 332 of the terminal plate 330 may not be exposed to the outside of the cap plate 31.

The lower portion 332 of the terminal plate may be formed to a size insertable into the hole 400 in order to be inserted into the hole. The lower portion 332 of the terminal plate may be formed, for example, in the shape of a rod and may be inserted into the hole 400. However, the shape of the lower portion 332 of the terminal plate may be formed in any shape that extends from the upper portion 331 and can be inserted into the hole 400, such as a polygonal column.

When viewed from an upper surface of the cap assembly 30, the upper portion 331 of the terminal plate may be formed to have a larger area than the lower portion 332 of the terminal plate. Accordingly, the lower portion 332 of the terminal plate may be formed in a shape that extends downward from a lower surface of the upper portion 331 of the terminal plate. Further, the lower portion 332 of the terminal plate may extend downward from a central portion of the lower surface of the upper portion 331 of the terminal plate.

With this structure, as the lower portion 332 is inserted into the hole 400 of the cap plate 31, and the upper portion 331 rests on an upper side of the cap plate 31, the terminal plate 330 may be coupled to the cap plate 31,

In addition, the lower portion 332 of the terminal plate may extend downward and face the sub-plate 350. As the lower portion of the terminal plate 330 extends toward the sub-plate 350, the terminal plate 330 becomes electrically connected to the sub-plate 350.

At this time, the sub-plate 350 electrically connects between the electrode assembly and the terminal plate 330. The description of the sub-plate 350 is the same as or similar to that provided in FIGS. 3 and 4.

For example, the sub-plate 350 may be bonded to the tab extending from the electrode assembly.

For example, the electrode assembly includes the positive electrode 11 and the negative electrode 12 (see FIG. 2). The sub-plate 350 includes a positive electrode sub-plate that is connected to the positive electrode 11 and collects current. The positive electrode sub-plate is bonded to a positive electrode tab extending from the positive electrode 11 and collects current from the positive electrode 11. For example, the sub-plate 350 includes a negative electrode sub-plate connected to the negative electrode 12 and collects current. The negative electrode sub-plate is bonded to a negative electrode tab extending from the negative electrode 12 and collects current from the negative electrode 12.

The sub-plate 350 is electrically connected to the terminal plate 330. For example, an upper side of the sub-plate 350 may be bonded to a lower side of the terminal plate 330. For example, an upper surface of the sub-plate 350 may be bonded to a lower side of the lower portion of the terminal plate 330 through welding.

At this time, the sub-plate 350 may include a protrusion 351 to improve welding efficiency with the terminal plate 330. The protrusion 351 may be formed as a portion of the sub-plate 350 that projects (e.g., protrudes) toward the terminal plate 330. For example, the protrusion 351 may be formed as a region of the sub-plate 350, which faces the lower portion 332 of the terminal plate and projects.

The sub-plate 350 is bonded to the terminal plate 330 through the protrusion 351.

In this case, the protrusion 351 may be formed to correspond to the shape of the lower portion 332 of the terminal plate. For example, when a lower surface of the lower portion 332 of the terminal plate has a flat surface, the protrusion 351 may be formed with a flat upper surface. For example, when the lower surface of the lower portion 332 of the terminal plate has a circular shape or a polygonal shape, the upper surface of the protrusion 351 may have a circular shape or a polygonal shape.

In addition, a size of a region of the protrusion 351 may be formed to correspond to a size of the lower surface of the lower portion 332 of the terminal plate. For example, the upper surface of the protrusion 351 may be formed with an area that is 50% to 150% of an area of the lower surface of the lower portion 332 of the terminal plate. When the upper surface of the protrusion 351 is formed to be less than 50% of the size of the lower surface of the lower portion 332 of the terminal plate, a bonding strength between the sub-plate 350 and the terminal plate 330 may be reduced. In addition, a resistance between the sub-plate 350 and the terminal plate 330 may increase. Accordingly, it is preferable that the upper surface of the protrusion 351 is formed to be 50% or more of the size (e.g., area) of the lower surface of the lower portion 332 of the terminal plate. In addition, when the upper surface of the protrusion 351 is formed to exceed 150% of the size of the lower surface of the lower portion 332 of the terminal plate, an upper space of the secondary battery 100 may be utilized inefficiently due to the protrusion 351. Accordingly, it is preferable that the upper surface of the protrusion 351 be formed to be 150% or less of the size of the lower surface of the lower portion 332 of the terminal plate.

A ratio of a thickness n of the sub-plate 350 and a height m of the protrusion 351 may be configured, for example, to be in a range of 0.2 to 0.6:0.8 to 1.2. In this case, the height m of the protrusion 351 represents the shortest distance between an extension line of the lower surface of the sub-plate 350 and an extension line of the upper surface of the protrusion 351. For example, when the thickness n of the sub-plate 350 is 0.4 mm, the height m of the protrusion 351 may be 1.4 mm. When the ratio of the thickness n of the sub-plate 350 and the height m of the protrusion 351 falls outside the range of 0.2 to 0.6:0.8 to 1.2, and thus the height m of the protrusion 351 is formed to be higher than this range, the sub-plate 350 may not be able to support the protrusion 351. In this case, a curved or bent region for forming the protrusion 351 may become damaged. In other embodiments, when the ratio of the thickness n of the sub-plate 350 and the height m of the protrusion 351 falls outside the range of 0.2 to 0.6:0.8 to 1.2, and thus the height m of the protrusion 351 is formed to be lower than this range, the sub-plate 350 may not be in contact with the terminal plate 330. Accordingly, it is preferable that the ratio of the thickness n of the sub-plate 350 and the height m of the protrusion 351 be configured in the range of 0.2 to 0.6:0.8 to 1.2.

As described above, the cap assembly 30 according to an embodiment of the present disclosure proposes a structure in which the current collecting part 310 can be omitted. Accordingly, the cap assembly 30 may further reduce the current path toward the terminal plate 330 from the electrode assembly. In addition, as the components of the cap assembly 30 are simplified, a space that the electrode assembly can occupy in the case 20 may be increased. Accordingly, the cap assembly 30 may contribute to increasing the capacity of the secondary battery 100.

Further, the cap assembly 30 described in FIGS. 3 and 4 requires two bonding points, one between the current collecting part 310 and the terminal plate 330 and the other one between the current collecting part 310 and the sub-plate 350. On the other hand, the cap assembly 30 according to an embodiment of the present disclosure described in FIG. 5 requires only one bonding point between the terminal plate 330 and the sub-plate 350. Accordingly, the cap assembly 30 may provide the effect of improving value engineering (VE).

Meanwhile, the cap assembly 30 may include an insulator to provide insulation between at least some of the components included in the cap assembly 30. The description of the insulator is the same as or similar to, for example, the description of the insulating member provided in FIGS. 1 and 2. Alternatively, the description of the insulator may be the same as or similar to, for example, the description of the top insulator 320 and/or the bottom insulator 340 provided in FIGS. 3 and 4.

The insulator 320 insulates between at least two of, for example, the cap plate 31, the terminal plate 330, and/or the sub-plate 350.

For example, the insulator 320 insulates between the terminal plate 330 and the cap plate 31 (e.g., the insulator 320 insulates the terminal plate 330 and the cap plate 31 from each other). To this end, the insulator 320 may be formed in contact with at least a portion of the terminal plate 330. The insulator 320 includes an upper insulator 321 and/or an intermediate insulator 322.

For example, the insulator 320 includes the intermediate insulator 322 that is located in the hole formed in the cap plate 31.

For example, the intermediate insulator 322 may be located between the lower portion 332 of the terminal plate inserted into the hole and an inner surface of the cap plate 31 formed by the hole. The intermediate insulator 322 may be formed to surround the lower portion 332 of the terminal plate. Alternatively, the intermediate insulator 322 may be located by being fitted into the hole, and the lower portion 332 of the terminal plate may be inserted into the hole while being fitted into the intermediate insulator 322. Through this, the intermediate insulator 322 may insulate between the terminal plate 330 and the hole formed in the cap plate 31.

For example, the insulator 320 includes the upper insulator 321 extending along the upper side of the cap plate 31 from the hole.

For example, the upper insulator 321 extends along an upper surface of the cap plate 31 from an upper side of the intermediate insulator 322. The upper insulator 321 may be formed to spread out in a circular or rectangular shape around the hole. The upper insulator 321 may be located between the cap plate 31 and the lower surface of the upper portion 331 of the terminal plate while extending along the upper side of the cap plate 31. Through this, the upper insulator 321 can insulate between the terminal plate 330 and the cap plate 31. The upper insulator 321 may be formed in a flat plate shape. Alternatively, the upper insulator 321 may include a groove into which the terminal plate 330 may be fixed.

For example, the insulator 320 insulates between the sub-plate 350 and the cap plate 31. To this end, the insulator 320 may be formed in contact with at least a portion of the sub-plate 350. The insulator 320 may include a lower insulator 323.

For example, the insulator 320 includes the lower insulator 323 located between the sub-plate 350 and the cap plate 31.

For example, the lower insulator 323 extends along the lower surface of the cap plate 31 from a lower side of the intermediate insulator 322. The lower insulator 323 may be formed to spread out in a circular or rectangular shape around the hole. The lower insulator 323 may be located between the cap plate 31 and an upper surface of the sub-plate 350 while extending along the lower surface of the cap plate 31. Through this, the lower insulator 323 can insulate between the sub-plate 350 and the cap plate 31. For example, the lower insulator 323 may be formed in a flat plate shape.

The insulator 320 includes an insulating material. The insulating material may include at least of, for example, polyimide (PI), polysulfone, polyurethane (PU), polyamide (PA), 6,6 nylon, polycarbonate (PC), polytetrafluoroethylene (PTFE), polymethyl methacrylate (PMMA), and polyethylene terephthalate (PET).

For example, the insulator 320 may be formed in a shape corresponding to the shape of the hole, the terminal plate 330, and/or the sub-plate 350. The insulator 320 may be formed, for example, by injection.

The cap assembly 30 may include one insulator 320. Accordingly, for example, the upper insulator 321, the intermediate insulator 322, and the lower insulator 323 may all be formed by being integrally connected. However, the insulator 320 included in the cap assembly 30 may include, for example, a plurality of insulators 320. In this case, for example, at least some of the upper insulator 321, the intermediate insulator 322, and the lower insulator 323 may be provided separately without being connected. Hereinafter, the case in which the cap assembly 30 includes one insulator 320 will be described as an example.

With this configuration, the cap assembly 30 according to an embodiment of the present disclosure provides a structure in which the current collecting part 310 can be omitted. For example, the cap assembly 30 may provide a solution that reduces a current path and decreases resistance, by allowing the terminal plate 330 and the sub-plate 350 to be directly bonded. In addition, for example, the cap assembly 30 may include at least one insulator 320, thereby reducing space waste caused by the plurality of insulators. Accordingly, the cap assembly 30 may provide a solution that reduces the proportion of space occupied by the cap assembly 30 in the case 20 of the secondary battery 100, thereby increasing the capacity of the secondary battery 100.

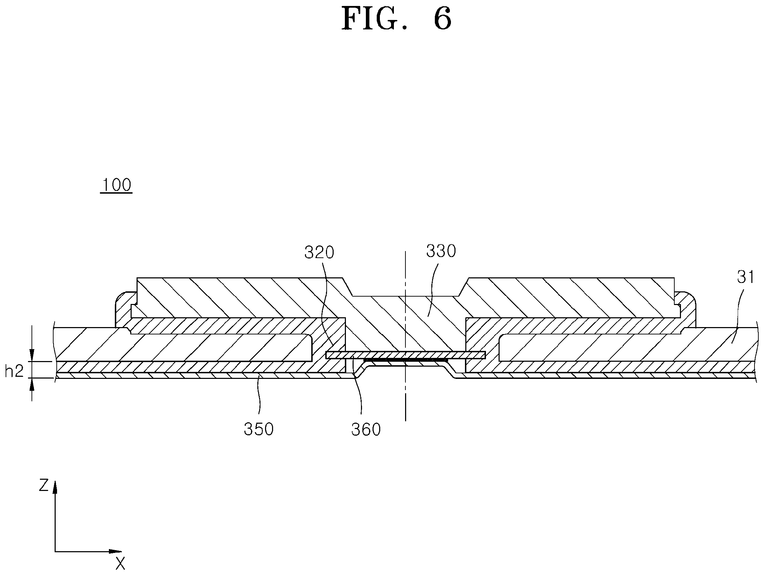

FIG. 6 is a cross-sectional view illustrating a cap assembly according to an embodiment of the present disclosure.

FIG. 6 is a cross-sectional view taken along line A-A' of FIG. 1, illustrating an enlarged view of region B.

As described in FIG. 5, a cap assembly 30 may include a terminal plate 330 and a sub-plate 350 that are bonded to each other.

In this case, the cap assembly 30 may further include a welding plate 360. The welding plate 360 may facilitate the connection between the terminal plate 330 and the sub-plate 350. In other embodiments, the welding plate 360 may prevent welding heat generated during a bonding process with the sub-plate 350 and/or the terminal plate 330 from damaging the electrode assembly. In still other embodiments, the welding plate 360 may improve a bonding strength with each of the sub-plate 350 and/or the terminal plate 330 by providing a larger area for bonding.

To this end, as shown in FIG. 6, the welding plate 360 is located between the terminal plate 330 and the sub-plate 350.

For example, the welding plate 360 may be formed in a flat plate shape. The welding plate 360 may include the same or similar material as the sub-plate 350 and/or the terminal plate 330. For example, the welding plate 360 may include aluminum (Al), copper (Cu), nickel (Ni), tungsten (W), iron (Fe), SUS, steel, gold (Au), silver (Ag), or an alloy thereof.

In other embodiments, unlike that shown in FIG. 6, the terminal plate 330 may be bonded to the sub-plate 350 while forming a clad metal (e.g., the terminal plate 330 may be bonded to the sub-plate 350 by a clad metal).

The method of bonding between the terminal plate 330 and the sub-plate 350 may vary. For example, the terminal plate 330 may be directly bonded to the sub-plate 350 on which a protrusion 351 is not formed. In other embodiments, for example, the terminal plate 330 may be bonded to the sub-plate 350, on which the protrusion 351 is not formed, through the welding plate 360. In still other embodiments, for example, the terminal plate 330 may form a clad metal with the welding plate 360 and may be bonded to the sub-plate 350 through the welding plate 360.

When the cap assembly 30 includes the current collecting part 310 and the plurality of insulators 320 and 340 as described in FIGS. 3 and 4, the height of the cap assembly 30 corresponds to h1. In addition, as described in FIGS. 5 and 6, when the current collecting part 310 is omitted from the cap assembly 30, the height of the cap assembly 30 corresponds to h2. That is, h2 represents the shortest distance between the lower surface of the cap plate 31 and the lower surface of the sub-plate 350.

At this time, h2 has a smaller value than h1. For example, h2 may have a smaller value than h1 due to the omission of the bottom insulator 340 and the current collecting part 310. Through this, the cap assembly 30 according to an embodiment of the present disclosure and the secondary battery 100 including the cap assembly can achieve reduced current path, decreased resistance, reduced cost, and/or increased capacity.

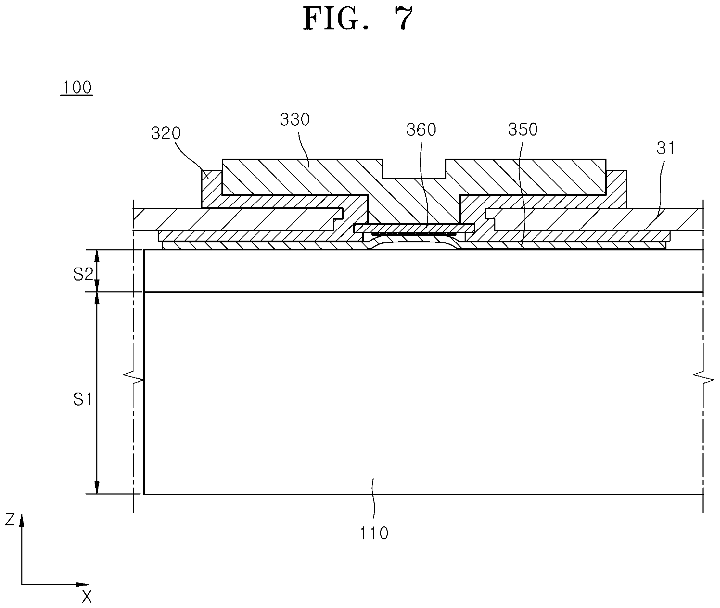

FIG. 7 is a cross-sectional view illustrating a secondary battery according to an embodiment of the present disclosure.

FIG. 7 is a cross-sectional view taken along line A-A' of FIG. 1, illustrating an enlarged view of region B.

A secondary battery 100 according to an embodiment of the present disclosure includes an electrode assembly 110, a case 20 that accommodates the electrode assembly 110, and a cap assembly 30 that seals the case 20. The cap assembly 30 includes a cap plate 31 coupled to the case 20 and having a hole formed therein, a terminal plate 330 having a lower portion inserted into the hole and an upper portion located above the cap plate 31 and exposed, and a sub-plate 350 located between the cap plate 31 and the electrode assembly 110 and bonded to the lower portion of the terminal plate.

In FIG. 7, S1 represents a volume of a space that the conventional electrode assembly has occupied in the case 20. In FIG. 7, S2 represents a volume of a space that the electrode assembly 110 according to an embodiment of the present disclosure can additionally occupy in the case 20. That is, the electrode assembly 110 can occupy a volume equal to the sum of S1 and S2. The electrode assembly 110 can occupy an additional volume of S2 compared to the related art.

As described above, the secondary battery 100 according to an embodiment of the present disclosure may further contribute to the increase in capacity as the height of the cap assembly 30 is reduced.

As described in FIGS. 3 to 7, the cap assembly 30 according to an embodiment of the present disclosure and the secondary battery 100 including the cap assembly 30 aim to reduce resistance and/or increase capacity. In particular, the cap assembly 30 described with reference to FIGS. 5 to 7 and the secondary battery 100 including the cap assembly 30 further aim to reduce resistance and/or increase capacity.

Table 1 below shows measured values that describe the capacity of the secondary battery 100 including the cap assembly 30. The comparative example in Table 1 shows measured values for a secondary battery that includes the cap assembly described with reference to FIGS. 3 and 4. The example in Table 1 shows measured values for a secondary battery that includes the cap assembly described with reference to FIGS. 5 to 7. In Table 1, a thickness of the case 20 and a thickness of the cap plate 31 are the same in both the comparative example and example.

**[Table 1]**

| | Height of cap assembly | Height of electrode assembly | Capacity increase rate |
|---|---|---|---|
| Comparative Example | 5.3 mm | 100 mm | - |
| Example | 1.2 mm | 104 mm | +4% |

In Table 1, heights of the cap assembly represent h1 and h2 as described in FIGS. 3 to 6. In Table 1, a height of the electrode assembly represents a height of the electrode assembly in the height direction (z-axis direction). In Table 1, the capacity increase rate represents a ratio of the increased capacity of the secondary battery relative to the capacity in the comparative example.

As can be seen from Table 1, the secondary battery 100 according to an embodiment of the present disclosure may provide a solution for reducing the space occupied by the cap assembly 30 inside the case 20 and increasing the capacity of the secondary battery 100. In particular, it can be seen that the secondary battery 100 including the cap assembly 30 described with reference to FIGS. 5 to 7 has a greater effect on increasing capacity.

According to the present disclosure, the capacity of a secondary battery can be increased.

According to the present disclosure, a current path of a secondary battery can be improved.

According to the present disclosure, the resistance of a secondary battery can be reduced.

According to the present disclosure, manufacturing costs of a cap assembly and/or a secondary battery can be reduced.

However, it will be appreciated by persons skilled in the art that the effects that can be achieved through the present disclosure are not limited to what has been described hereinabove and other advantages of the present disclosure will be more clearly understood from the following detailed description.

While the above disclosure has been described with reference to the example embodiments illustrated in the accompanying drawings, it should be understood that the disclosure is not limited to the disclosed embodiments, but is intended to cover various modifications and equivalent arrangements included within the sprit and scope of the appended claims.

Accordingly, the scope of the present disclosure shall be determined only according to the attached claims.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of the present invention as set forth in the following claims.

## Claims

1. A cap assembly, comprising:
a cap plate having a hole therein;
a terminal plate having a lower portion in the hole, and an upper portion above the cap plate and exposed; and
a sub-plate below the cap plate, the sub-plate being bonded to the lower portion of the terminal plate.

2. The cap assembly as claimed in claim 1, wherein the terminal plate is electrically connected to the sub-plate via the lower portion of the terminal plate.

3. The cap assembly as claimed in claim 1 or claim 2, wherein the sub-plate includes a protrusion protruding toward the terminal plate, the sub-plate being bonded to the terminal plate through the protrusion.

4. The cap assembly as claimed in claim 3, wherein a ratio of a thickness of the sub-plate and a height of the protrusion is in a range of 0.2 to 0.6:0.8 to 1.2.

5. The cap assembly as claimed in any preceding claim, wherein an upper side of the sub-plate is welded to a lower side of the terminal plate.

6. The cap assembly as claimed in any preceding claim, further comprising a welding plate between the terminal plate and the sub-plate.

7. The cap assembly as claimed in any preceding claim, wherein the terminal plate is bonded to the sub-plate by a clad metal.

8. The cap assembly as claimed in any preceding claim, further comprising an insulator in the hole, the insulator insulating the terminal plate and the cap plate from each other.

9. The cap assembly as claimed in claim 8, wherein the insulator extends along an upper side of the cap plate from the hole, the insulator insulating the terminal plate and the upper side of the cap plate from each other.

10. The cap assembly as claimed in claim 8, wherein the insulator extends along a lower side of the cap plate from the hole, the insulator insulating the sub-plate and the lower side of the cap plate from each other.

11. A secondary battery, comprising:
an electrode assembly;
a case accommodating the electrode assembly therein; and
the cap assembly of any preceding claim which is coupled to the case and seals the case.

12. The secondary battery as claimed in claim 11, wherein the sub-plate electrically connects the electrode assembly and the terminal plate.
